# FASCICULE DE BREVET EUROPEEN

(11) **EP 2 526 467 B1**
(45) Date de publication et mention de la délivrance du brevet: **27.11.2019**
(21) Numéro de dépôt: 10801422.6
(22) Date de dépôt: 31.12.2010
(51) Int. Cl.: G06F 3/00, G06F 9/30

(54) **PROCEDE D'AFFICHAGE D'UN CONTENU MULTIMEDIA SUR UN ÉCRAN DE TERMINAL**
VERFAHREN ZUR ANZEIGE VON MULTIMEDIAINHALTEN AUF DEM BILDSCHIRM EINES ENDGERÄTS
METHOD FOR DISPLAYING MULTIMEDIA CONTENT ON A SCREEN OF A TERMINAL

(30) Priorité: 21.01.2010 FR 1050404
(43) Date de publication de la demande: 28.11.2012
(73) Titulaire: SAGEMCOM BROADBAND SAS, 92500 Rueil-Malmaison (FR)
(72) Inventeur: MORARD, Jean-Pierre, 92500 Rueil-Malmaison (FR)
(74) Mandataire: Camus, Olivier Jean-Claude
(86) Numéro de dépôt international: PCT/EP2010/070953
(87) Numéro de publication internationale: WO 2011/088962

(56) Documents cités:
- US-A1- 2002 174 010
- US-A1- 2005 185 102
- US-A1- 2006 015 580
- US-A1- 2009 034 784
- RICHARDSON T ET AL: "The RFB Protocol Version 3.3", , [Online] pages 1-26, XP002562572, Extrait de l'Internet: URL:http://grox.net/doc/apps/vnc/rfbproto. pdf> [extrait le 2010-01-11] cité dans la demande
- PIETER SIMOENS ET AL: "Design and implementation of a hybrid remote display protocol to optimize multimedia experience on thin client devices", TELECOMMUNICATION NETWORKS AND APPLICATIONS CONFERENCE, 2008. ATNAC 2008. AUSTRALASIAN, IEEE, PISCATAWAY, NJ, USA, 7 décembre 2008 (2008-12-07), pages 391-396, XP031424763, ISBN: 978-1-4244-2602-7
- GOO JUN ED - ZHI YU ET AL: "Home media center and media clients for multi-room audio and video applications", CONSUMER COMMUNICATIONS AND NETWORKING CONFERENCE, 2005. CCNC. 2005 SECOND IEEE, IEEE, PISCATAWAY, NJ, USA, 3 janvier 2005 (2005-01-03), pages 257-260, XP010787646, ISBN: 978-0-7803-8784-3

## Description

### Domaine technique de l'invention

La présente invention concerne un procédé d'affichage d'un contenu multimédia sur un écran de terminal.

### Arrière-plan technologique de l'invention

Le développement des réseaux de télécommunications a accru le nombre de documents, ou de fichiers, stockés dans des serveurs reliés à ces réseaux et pouvant être consultés par un utilisateur distant via son terminal.

Ainsi des utilisateurs munis de terminaux associés à des écrans peuvent visualiser de nombreux contenus multimédia tels que des pages Web ou des vidéos. A cet effet, ces terminaux peuvent être fixes - comme un décodeur associé à un téléviseur - ou mobiles - comme un téléphone portable - et reliés à un ou plusieurs types de réseaux de télécommunication tel que le réseau Internet ou le réseau cellulaire 3G.

Il apparaît que l'accès à des contenus distants présente l'inconvénient de pouvoir se révéler fastidieux, voire difficile, lorsque cet accès requiert de consulter de nombreuses informations avant de trouver le contenu recherché et/ou de mettre en œuvre la transmission d'un fichier volumineux alors même que le contenu recherché représente un élément minoritaire de ce fichier.

A titre d'exemple, un utilisateur souhaitant consulter un annuaire téléphonique pour obtenir le numéro de téléphone d'un individu peut être contraint de télécharger l'ensemble de cet annuaire, avec des milliers d'entrées, si cet annuaire est codé sous un formant - par exemple du type PDF^{Tm}, JPEG 2000^{Tm} ou MsWord^{Tm} - qui ne permet pas la transmission partielle de ce fichier et, notamment, de la partie comprenant le contenu recherché.

US2005/0185102A1, "Single Touch Launch of remote applications over video", divulgue l'affichage de contenus vidéo sous un format vidéo comme CCIR656, permettant la transmission partielle de fichiers.

US2006/015580 décrit une installation pour la distribution de contenu multimédia à des terminaux utilisateur comprenant un serveur sur lequel est stocké un contenu multimédia sous un ou plusieurs formats et une base de données utilisateur contenant des informations relatives aux formats supportés.

### Description générale de l'invention

Dans ce contexte, la présente invention vise à résoudre cet inconvénient en proposant un procédé qui permet à un utilisateur d'accéder à une partie d'un contenu multimédia sans requérir la transmission de l'ensemble du fichier codant ce contenu. Elle résulte de la constatation selon laquelle un protocole de partage graphique, du type RUI pour « Remote User Interface », peut permettre à un serveur de transmettre l'affichage d'un contenu multimédia sous la forme d'une image et, inversement, de recevoir des commandes de la part d'un terminal.

C'est pourquoi la présente invention concerne un procédé de rendu d'un contenu multimédia sur un écran de terminal multimédia, ce contenu multimédia étant codé par des données comprises dans un fichier, stocké par un serveur distant dudit terminal, sous un format tel que l'ensemble du fichier est requis par une application traitant ce format pour générer un affichage dudit contenu multimédia sur un écran du terminal, caractérisé en ce qu'il comprend les étapes suivantes:
- l'étape pour le terminal de requérir la transmission d'un codage de l'affichage du contenu multimédia selon un format de rendu défini,
- l'étape pour le serveur d'utiliser le fichier pour générer le codage du rendu dudit contenu multimédia selon le format de rendu défini par le terminal, et
- l'étape pour le serveur de transmettre le codage de ce rendu au terminal au moyen d'un protocole de partage d'interface graphique.

Grâce à l'invention, un terminal souhaitant afficher un contenu multimédia n'a besoin ni de recevoir ni de traiter l'ensemble du fichier comprenant le codage du contenu multimédia puisque seul le codage du rendu, c'est à dire de l'affichage, souhaité lui est transmis par le serveur distant.

Dès lors, la transmission d'un contenu multimédia requiert une quantité de données particulièrement réduite et, par conséquent, un coût d'accès également réduit, notamment en temps, par rapport à une transmission selon l'art antérieur i.e. comprenant l'ensemble du fichier.

Dans une réalisation, le procédé comprend l'étape supplémentaire pour le terminal de mémoriser différents formats de rendus définis pour différentes applications traitant différents formats de fichiers.

Selon une réalisation, le procédé comprend l'étape supplémentaire pour le terminal d'afficher des boutons de commande sur un écran et d'associer la commande d'un tel bouton à la transmission d'une commande vers le serveur destinée à contrôler l'utilisation du fichier par le serveur.

Dans une réalisation, le procédé comprend la transmission d'une commande vers le serveur par le terminal codé selon un protocole de partage d'interface graphique.

Selon une réalisation, le contenu multimédia comprenant une vidéo, le serveur transmet le codage du rendu de la vidéo au moyen, d'une part, de données data codant la position de la vidéo selon le format de rendu défini et, d'autre part, de données vidéo codant les images formant la vidéo.

Dans une réalisation, les données data et les données vidéo sont générées à partir d'une même mémoire stockant le codage d'un rendu du contenu multimédia généré par le serveur selon un codage matriciel.

Selon une réalisation, le procédé comprend l'étape supplémentaire de traiter les données data générées pour inhiber la transmission de données vidéo.

Dans une réalisation, le format d'affichage défini détermine la taille du rendu dédiée par le terminal sur son écran au contenu multimédia.

L'invention concerne également un serveur stockant un contenu multimédia dans un fichier, codé sous un format tel que l'ensemble du fichier est requis par une application traitant ce format pour générer un rendu dudit contenu multimédia sur un écran, caractérisé en ce qu'il comprend:
- des moyens pour recevoir une requête de transmission d'un codage de l'affichage du contenu multimédia selon un format de rendu défini émise par un terminal distant,
- des moyens pour utiliser le fichier stocké pour générer le codage du rendu dudit contenu multimédia selon le format de rendu défini par le terminal, et
- des moyens pour transmettre le codage de ce rendu au terminal au moyen d'un protocole de partage d'interface graphique de façon à participer à la mise en œuvre d'un procédé conforme à l'une des réalisations précédentes.

L'invention concerne également un terminal comprenant des moyens de rendu d'un contenu multimédia sur un écran, ce contenu multimédia étant codé par des données comprises dans un fichier, stocké par un serveur distant dudit terminal, sous un format tel que l'ensemble du fichier est requis par une application traitant ce format pour générer un rendu dudit contenu multimédia sur un écran du terminal, caractérisé en ce qu'il comprend des moyens pour requérir la transmission d'un codage du rendu du contenu multimédia selon un format de rendu défini de façon à mettre en œuvre un procédé selon l'une des réalisations précédentes.

### Brève description des figures

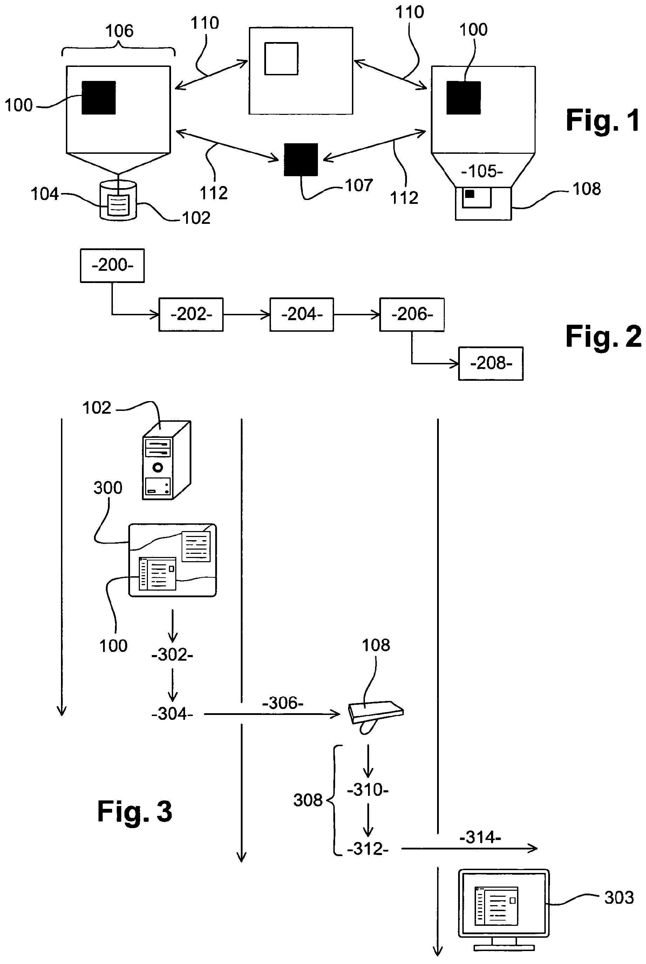

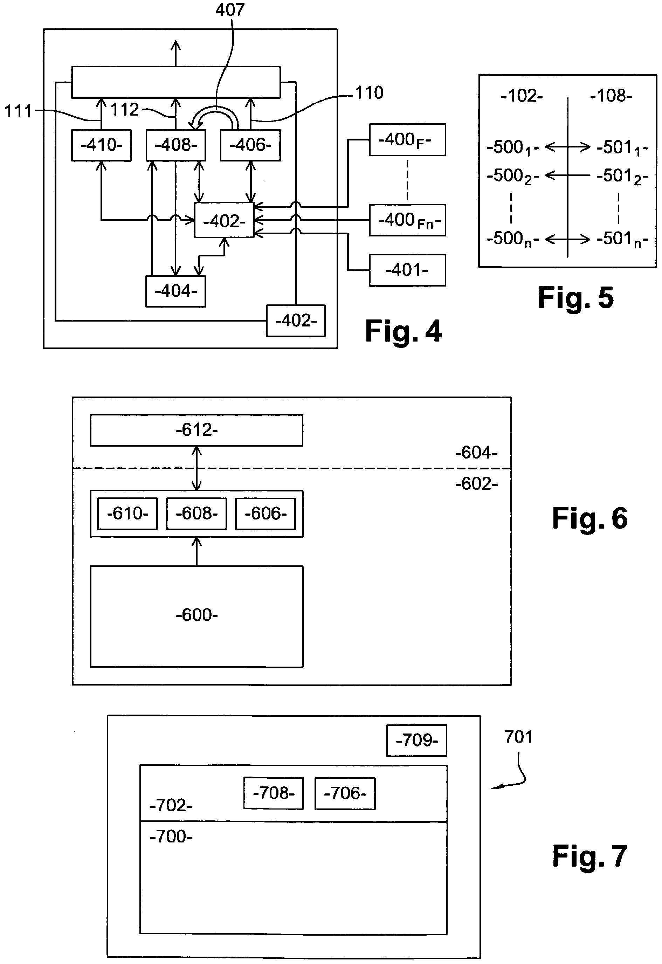

D'autres caractéristiques et avantages de l'invention ressortiront clairement de la description qui en est donnée ci-dessous, à titre indicatif et nullement limitatif, en référence aux figures ci-jointes sur lesquelles :
- Aux figures 1, 2 et 3 sont représentées schématiquement des étapes d'opérations effectuées par un serveur et/ou un terminal mettant en œuvre l'invention,
- A la figure 4 est représentée, au moyen de blocs fonctionnels, une structure d'un serveur conforme à l'invention,
- A la figure 5 est représenté un tableau de format d'affichage pouvant être mis en œuvre par un terminal conforme à l'invention,
- A la figure 6 est représentée, au moyen de blocs fonctionnels, une structure d'un serveur conforme à l'invention, et
- A la figure 7 est représentée la structure d'un écran d'affichage d'un terminal mettant en œuvre l'invention.

### Description des formes de réalisation préférées de l'invention:

En référence à la figure 1 est représenté un procédé de transmission d'un contenu multimédia 100 conformément à l'invention. A cet effet, ce procédé met en œuvre un serveur 102 stockant un fichier multimédia 104 devant être mis en œuvre, par une application spécifique au format du fichier 104, pour permettre un rendu, dénommé par la suite un affichage, dudit contenu multimédia 102 sur un écran multimédia 107 d'un terminal 108 distant dudit serveur 102.

Afin de transmettre ce contenu multimédia 100 au terminal 108 distant sans transmettre l'ensemble du fichier 104, le serveur 102 de stockage exécute le fichier multimédia 104 pour obtenir un codage d'un affichage 106 dudit contenu multimédia 100, ce qui permet la transmission du contenu multimédia 100 au moyen d'un protocole de partage d'interface graphique et d'un protocole de transmission par paquets de données, ou « streaming » en anglais, audio et video vers le terminal 108.

En d'autres termes, le terminal 108 peut recevoir ledit contenu multimédia 100, sous un format d'affichage préalablement communiqué au serveur 102, sans requérir la transmission de l'ensemble du fichier 104.

Lorsque le contenu multimédia 100 comporte une vidéo, au moins deux mises en œuvre de l'invention peuvent être utilisées :
- Une première mise en œuvre selon laquelle le terminal 108 peut rendre - afficher - cette vidéo directement à partir du flux vidéo compressé, par exemple par un mécanisme de logiciels dénommés « hooks » dans le système opératif de Windows™,
- Une seconde mise en œuvre selon laquelle le terminal 108 ne peut pas rendre - afficher - cette vidéo directement à partir du flux vidéo compressé.

Dans ce dernier cas, considérant que l'image affichée du contenu multimédia 100 varie avec le temps, la transmission du contenu multimédia s'effectue selon deux canaux, à savoir un premier canal 110 dédié à la transmission de données data, ou d'interface homme/machine relatives à, par exemple, la position du contenu multimédia 100 sur l'écran 107 d'affichage du terminal 108 - et, d'autre part, des données vidéo 112 transmettant les images affichées - par exemple par un codage de la couleur et de la luminosité des pixels formant les images.

Ainsi, le terminal 108 peut, d'une part, recevoir la vidéo et, d'autre part, localiser cette vidéo sur son écran selon un procédé de PIP, pour « Picture In Picture » en anglais, selon laquelle l'image 107 transmise est fusionnée dans l'emplacement 109 indiqué de l'écran 105 du terminal 108.

Comme décrit ultérieurement à l'aide de la figure 4, dans ce cas de contenu vidéo, le canal data 110 est relié au canal vidéo 112 de telle sorte qu'on puisse inhiber la transmission de données vidéo selon le canal 110 et, ainsi, d'éviter une redondance de transmission.

D'une façon générale, un procédé conforme à l'invention mettant en œuvre un contenu vidéo 100 met en oeuvre les 5 étapes détaillées à la figure 2 pour transmettre des données selon le canal vidéo 112, à savoir :
- Une première étape 200 de détection d'une vidéo dans l'affichage 106 généré par l'exécution du fichier 104. A cet effet, il est possible de modifier l'application générant le contenu vidéo pour qu'elle transmette un signal de détection ou, de façon alternative, de maître en oeuvre une application maîtresse - telle que les « hooks », ou programmes crochets, de Windows™ - qui permettent d'obtenir des informations sur l'accès aux fichiers par une application dans un serveur et sur la fenêtre de rendu de cette application, ce qui permet ainsi de détecter la mise en œuvre d'une vidéo.

Finalement, il convient de noter que, dans une variante, il est également possible de détecter des zones de l'affichage 106 de la vidéo (le nom de la fenêtre de rendu indiquant qu'il s'agit d'un playeur video) ou assimilé a de la vidéo (zone fréquemment modifiées et qui, statistiquement, peuvent être assimilées à des zones de reproduction de vidéos).
- Une deuxième étape 202 de récupération de vidéos dans l'affichage 106 généré par l'exécution du fichier 104. Différents procédés peuvent être mis en œuvre lors de cette étape mais, d'une façon générale, on peut distinguer, d'une part, les récupérations effectuées sans que le serveur ne décode le fichier 104 et, d'autre part, les récupérations effectuées après que le serveur 102 ait décodé le fichier 104, comme détaillé ci-dessous:
   i) Lors d'une récupération 202 sans décodage, il convient de mettre en œuvre une détection 200 qui transmette l'emplacement du codage du contenu multimédia 100 dans le fichier 104 afin de permettre la transmission du codage de ce contenu multimédia 100.
      Par ailleurs, cette détection 200 doit permettre de connaître la zone où le contenu multimédia est affiché ainsi que son état - arrêt, pause, lecture, accéléré, par exemple au moyen des « hooks » de Windows™ qui permettent de capturer les événements envoyés par l'application à un système opératif qui joue alors un rôle de « middleware », notamment d'abstraction et de gestion du partage des ressources systèmes entre les différentes applications).
   ii) Lors d'une récupération 202 après décodage, les adresses de l'emplacement du codage du contenu multimédia peut être obtenues sous la forme d'adresses dans une carte graphique reproduisant le contenu multimédia 100.
      - Une troisième étape 204 d'encodage des affichages du contenu 100 récupérés dans un format permettant la reproduction de ces contenus 100 comme une vidéo, tel que le format H264.
      - Une quatrième étape 206 de transmission du fichier via le réseau de télécommunication considéré et une cinquième étape 208 de traitement par le terminal 108.

Parallèlement à ces opérations effectuées sur le canal vidéo, différentes étapes sont mises en œuvre dans le canal data 110, par exemple à l'aide du protocole RFB tel que décrit dans le document « The RFB Protocol », de Tristan Richardson, Real VNC Ltd, version 3.8, mise à jour le 26 février 2009 (http://www.realvnc.com).

Selon un tel protocole, le terminal 108, également dénommé terminal RFB ou terminal client, peut afficher un contenu multimédia 100 généré par le serveur 102 distant, ce dernier hébergeant les moyens hardwares - composants - et software - logiciels - pour déterminer ce contenu multimédia 100 en fonction de commandes émises par le terminal 108 comme décrit ultérieurement.

De fait, le protocole RFB se caractérise par l'utilisation d'instructions graphiques simples telles qu'une commande pour afficher un rectangle de pixels de données à une position (x, y) donnée de l'écran.

Chaque image formée par le serveur RFB est stockée dans une mémoire tampon - dite « framebuffer » - du serveur 102, généralement codée en format RGB (« Red Green Blue » en anglais), qui constitue la manière la plus directe de coder les images, les trois plans correspondant aux trois couleurs élémentaires rouge, vert et bleu.

C'est pourquoi, selon une première étape 300 (figure 3), le serveur 102 effectue une capture d'écran au format RGB qui permet d'obtenir l'affichage du contenu 100.

Selon une seconde étape 302, les données codées selon le format RGB sont avantageusement converties au format YUV qui opère une compression des données avec une perte peu perceptible par le systeme de vision humain et qui de plus est le format usuel supporté par un encodeur vidéo) puis encodées (étape 304) et transmises (étape 306) selon le format H264 encapsulé dans le protocole RFB.

De ce fait, l'étape 308 de traitement des données reçues par le terminal 108 - en l'espèce un décodeur associé à un téléviseur 303 - comprend les opérations de désencapsulation 310 des données codées selon le protocole RFB, de décodage 312 de l'image selon le protocole H264 puis de fusion 314 de l'image décodée avec l'image de l'écran afin de permettre sa transmission au dispositif d'affichage 303.

En référence à la figure 4 sont représentés différents éléments fonctionnels d'un serveur 102 permettant de mettre en œuvre les étapes serveurs telles que précédemment décrites:
Plus précisément un tel serveur 102 est associé à une pluralité d'applications 400_{F} à 400_{Fn}, chacune de ces applications pouvant exécuter différents fichiers de formats F à Fn distincts de façon à obtenir le codage de l'affichage de l'application requise.

En outre, le serveur 102 comprend un gestionnaire 402 d'applications pouvant commander cette application vis-à-vis d'un fichier, et pour une taille d'affichage, requise et définie par un terminal.

Par exemple, si le serveur 102 doit exécuter un fichier au format « .pdf », le gestionnaire 402 commande une application 400_{pdf} prenant en charge ce format afin d'obtenir le codage de l'affichage d'un fichier, dans le format PDF, vis-à-vis d'une taille d'affichage requise.

D'une façon générale, lorsque le terminal 108 requiert la transmission d'un contenu multimédia contenu dans un fichier au format i, le gestionnaire 402 peut commander l'application 400ᵢ requise pour exécuter ce fichier et obtenir le codage de l'affichage du contenu multimédia dans une mémoire vive, ou « Framebuffer » en anglais, 404.

A partir de ce codage dans la mémoire vive 404, le gestionnaire 402 peut générer un flux 112 de données vidéo, transmis par un module vidéo 406, et un flux 110 de données data, transmis par un module data 408.

Comme déjà décrit, le flux data 110 transmet des paramètres permettant de localiser l'image sur l'écran du terminal mais doit être inhibé pour éviter une double transmission de données vidéo.

C'est pourquoi le module 406 inhibe le module 408 - opération 407 - afin que ce dernier ne transmette pas des données vidéo issues de la mémoire vive 404.

Le serveur 102 comprend également un module audio 410 générant un flux audio 111. Toutefois, lorsque le flux video compressé est capturé sur le serveur, ce module audio n'est pas mise en ouvre car le module vidéo 406 peut également traiter le flux audio comme, par exemple, dans le format MPEG pour « Motion Picture Expert Group » en anglais, le flux audio étant alors confondu avec le flux vidéo préalablement à leur transmission via une interface IP 405, pour « Internet Protocol » en anglais.

Ces flux audio 111 et vidéo 112 concernent des données brutes, ou « RAW » en anglais, correspondant au flux audio/vidéo généré à partir du Framebuffer tandis que le canal data transmet les évènements IHM et le plan de rendu.

Finalement, il convient de noter que le serveur 102 est, dans cette réalisation, un serveur spécifiquement dédié à l'obtention du codage d'affichage d'un contenu multimédia.

Aussi, le serveur 102 requiert auprès d'un serveur 401 distant, dédié au stockage du fichier requis, la transmission de ce dernier afin d'obtenir le codage de l'affichage.

En référence à la figure 6, le fonctionnement du terminal 108 est représenté au moyen de ses composants hardware 600 qui sont contrôlés, dans l'espace du système opératif 602, par des pilotes, ou logiciels dédiés, 606 (flux data), 608 (flux vidéo) et 610 (flux audio).

Ces pilotes permettent l'extraction des données relatives à la position de l'affichage sur l'écran du terminal et au traitement des données saisies par l'utilisateur via une interface affichée sur l'écran et contrôlée par une application 612 présente dans l'espace utilisateur 604.

Cet espace utilisateur 604 est contrôlé à partir de l'affichage sur l'écran 701 (figure 7) qui est divisé en trois zones, à savoir :
- une première zone 700, également dénommée par la suite fenêtre de rendu de fichier et dont les dimensions correspondent à celles de la fenêtre codée par le serveur de stockage dans sa mémoire « Framebuffer »,
- une deuxième zone 702 munie de boutons 704 et 706 de commande dans une barre du type Google™ Toolbar affichant des fonctions pouvant correspondre à des commandes pour l'application de rendu de fichier du serveur.

Par exemple, une commande du bouton 704 affichée comme « sauvegarde de dossier » peut correspondre à une procédure, au niveau du serveur 102, équivalente à l'appui des touches « ALT »-«S » qui génère ladite fonction de sauvegarde,
- Une troisième zone comprenant une adresse, par exemple un URL 709, permettant d'adresser des messages au terminal.

De fait, comme montré sur la figure 5, un tableau de correspondance entre des événements, c'est-à-dire des commandes 500₁, 500₂, ...500ₙ dans l'exécution d'un fichier côté serveur, et des signaux 501₁, 501₂, ...501ₙ émis par le terminal peut permettre à ce dernier de commander, via une interface graphique, les évènements 500₁, 500₂, ...500ₙ.

Il convient de noter que la description effectuée ci-dessus met en œuvre un décodeur numérique mais l'invention peut être mise en œuvre avec tout type de terminal comprenant des capacités de décodage vidéo, tel qu'un ordinateur, une tablette Web, ou téléphone cellulaire.

La présente invention est susceptible de nombreuses variantes. Par exemple, un terminal RFB peut présenter plusieurs outils de saisies - claviers ou souris par exemple - associés à un ou plusieurs moniteurs qui peuvent être locaux - directement relié au serveur - ou distant - indirectement relié au serveur via un réseau du type Internet.

En outre, le serveur RFB peut également être un terminal RFB de telle sorte qu'il partage, en commun ou en virtuel, ses ressources avec d'autres terminaux.

De même, en fonction des variantes, le terminal utilisateur peut être fixe - comme un décodeur numérique associé à un téléviseur - ou mobile - comme un téléphone cellulaire, un ordinateur portable ou une tablette Web.

## Revendications

1. Procédé d'affichage d'une partie d'un contenu multimédia (100) sur un écran (107) de terminal multimédia (108), le contenu multimédia (100) étant codé par des données comprises dans un fichier (104), stocké par un serveur distant (102) du terminal (108), sous un format tel que l'ensemble du fichier (104) est requis par une application traitant ce format pour générer un affichage du contenu multimédia sur l'écran (107) du terminal (108), **caractérisé en ce qu'**il comprend les étapes suivantes :
- l'étape pour le terminal (108) de requérir la transmission d'un codage de l'affichage (106) de la partie du contenu multimédia (100) selon un format de rendu défini,
- l'étape pour le serveur (102) d'utiliser le fichier pour générer ledit codage de l'affichage (106) selon le format de rendu défini par le terminal (108), et
- l'étape pour le serveur (102) de transmettre, au terminal (108), ledit codage de l'affichage (106) sous la forme d'une image, au moyen d'un protocole de partage d'interface graphique, permettant ainsi à un utilisateur d'accéder à la partie du contenu multimédia sans requérir la transmission de l'ensemble du fichier codant ce contenu.

2. Procédé selon la revendication 1 **caractérisé en ce qu'**il comprend l'étape supplémentaire pour le terminal (108) de mémoriser différents formats de rendus définis pour différentes applications traitant différents formats de fichiers (104).

3. Procédé selon la revendication 2 **caractérisé en ce qu'**il comprend l'étape supplémentaire pour le terminal (108) d'afficher des boutons de commande sur un écran (701) et d'associer la commande d'un tel bouton à la transmission d'une commande vers le serveur destinée à contrôler l'utilisation du fichier par le serveur.

4. Procédé selon la revendication 3 **caractérisé en ce que** la transmission d'une commande vers le serveur (102) par le terminal (108) est codé selon un protocole de partage d'interface graphique.

5. Procédé selon l'une des revendications précédentes **caractérisé en ce que**, le contenu multimédia étant une vidéo, le serveur (102) transmet le codage de l'affichage de la vidéo au moyen, d'une part, de données data codant la position de la vidéo selon le format de rendu défini et, d'autre part, de données vidéo codant les images formant la vidéo.

6. Procédé selon la revendication 5 **caractérisé en ce que** les données data et les données vidéo sont générées à partir d'une même mémoire (404) stockant le codage d'un affichage du contenu multimédia généré par le serveur selon un codage matriciel.

7. Procédé selon l'une des revendications 4, 5 ou 6 **caractérisé en ce qu'**il comprend l'étape supplémentaire (407) de traiter les données data générées pour inhiber la transmission de données vidéo.

8. Procédé selon l'une des revendications précédentes **caractérisé en ce que** le format d'affichage défini détermine la taille de l'affichage dédiée par le terminal sur son écran au contenu multimédia.

9. Serveur stockant un contenu multimédia (100) dans un fichier (104), codé sous un format tel que l'ensemble du fichier (104) est requis par une application traitant ce format pour générer un affichage du contenu multimédia sur un écran, **caractérisé en ce qu'**il comprend :
- des moyens pour recevoir une requête de transmission d'un codage de l'affichage (106) d'une partie du contenu multimédia (100) selon un format de rendu défini, la requête étant émise par un terminal distant,
- des moyens pour utiliser le fichier stocké pour générer ledit codage de l'affichage (106) selon le format de rendu défini par le terminal (108), et
- des moyens pour transmettre, au terminal (108), ledit codage de l'affichage (106) sous la forme d'une image, au moyen d'un protocole de partage d'interface graphique, permettant ainsi à un utilisateur d'accéder à la partie du contenu multimédia sans requérir la transmission de l'ensemble du fichier codant ce contenu,
lesdits moyens participant à la mise en œuvre d'un procédé conforme à l'une des revendications précédentes.

10. Terminal (108) comprenant des moyens d'affichage d'une partie d'un contenu multimédia (100) sur un écran (107), le contenu multimédia (100) étant codé par des données comprises dans un fichier (104), stocké par un serveur distant (102) du terminal (104), sous un format tel que l'ensemble du fichier (104) est requis par une application traitant ce format pour générer un affichage du contenu multimédia sur un écran (107) du terminal (108), **caractérisé en ce qu'**il comprend des moyens pour requérir la transmission d'un codage de l'affichage (106) de la partie du contenu multimédia (100) sous la forme d'une image, selon un format de rendu défini de façon à mettre en œuvre un procédé selon l'une des revendications 1 à 8.

11. Programme d'ordinateur comprenant des instructions qui, lorsque le programme est exécuté par ordinateur, conduisent celui-ci à mettre en œuvre les étapes du procédé selon l'une quelconque des revendications 1 à 8.

12. Moyen de stockage lisible par un ordinateur, sur lequel est enregistré le programme d'ordinateur selon la revendication 11.

## Patentansprüche

1. Anzeigeverfahren eines Teils eines Multimedieninhalts (100) auf einem Bildschirm (107) eines Multimedienterminals (108), wobei der Multimedieninhalt (100) durch Daten kodiert ist, die in einer Datei (104) inbegriffen sind, die von einem entfernten Server (102) des Terminals (108) in einem derartigen Format gespeichert sind, dass die gesamte Datei (104) von einer Anwendung angefordert wird, die dieses Format verarbeitet, um eine Anzeige des Multimedieninhaltes auf dem Bildschirm (107) des Terminals (108) zu erzeugen, **dadurch gekennzeichnet, dass** es die folgenden Schritte umfasst:
- den Schritt, bei dem das Terminal (108) die Übertragung einer Anzeigekodierung (106) des Teils des Multimedieninhaltes (100) gemäß einem definierten Wiedergabeformat anfordert;
- den Schritt, bei dem der Server (102) die Datei verwendet, um die genannte Kodierung der Anzeige (106) gemäß dem definierten Wiedergabeformat durch das Terminal (108) zu erzeugen, und
- den Schritt, bei dem der Server (102) die genannte Kodierung der Anzeige (106) in Form eines Bildes mittels eines Protokolls zum Teilen der grafischen Schnittstelle auf das Terminal (108) überträgt und damit einem Nutzer den Zugriff auf den Teil des Multimedieninhaltes erlaubt, ohne die Übertragung der gesamten, diesen Inhalt kodierenden Datei anzufordern.

2. Verfahren gemäß Anspruch 1, **dadurch gekennzeichnet, dass** es den zusätzlichen Schritt umfasst, bei dem das Terminal (108) unterschiedliche definierte Wiedergabeformate für unterschiedlichen Anwendungen speichert, die unterschiedliche Dateiformate (104) verarbeiten.

3. Verfahren gemäß Anspruch 2, **dadurch gekennzeichnet, dass** es den zusätzlichen Schritt umfasst, bei dem das Terminal (108) Befehlsschaltflächen auf einem Bildschirm (701) anzeigt und den Befehl einer Schaltfläche auf die Übertragung eines zum Steuern der Verwendung der Datei durch den Server bestimmten Befehls zu dem Server zuordnet.

4. Verfahren gemäß Anspruch 3, **dadurch gekennzeichnet, dass** die Übertragung eines Befehls auf den Server (102) durch das Terminal (108) gemäß einem Protokoll zum Teilen einer grafischen Schnittstelle kodiert ist.

5. Verfahren gemäß einem der voranstehenden Ansprüche, **dadurch gekennzeichnet, dass** der Multimedieninhalt ein Video ist, der Server (102) die Kodierung der Anzeige des Videos mittels einerseits Position-Daten, die die Position des Videos gemäß dem definierten Wiedergabeformat kodieren, und andererseits Video-Daten, die für die das Video bildenden Bilder kodieren, überträgt.

6. Verfahren gemäß Anspruch 5, **dadurch gekennzeichnet, dass** die Position-Datenelemente und die Video-Daten ausgehend von einem und demselben Speicher (404) erzeugt werden, der die Kodierung einer Anzeige des Multimedieninhaltes speichert, der vom Server gemäß einer Matrixkodierung erzeugt wird.

7. Verfahren gemäß einem der Ansprüche 4, 5 oder 6, **dadurch gekennzeichnet, dass** es den zusätzlichen Schritt (407) zum Verarbeiten der Position-Datenelemente umfasst, die zum Unterdrücken der Übertragung von Videodaten erzeugt werden.

8. Verfahren gemäß einem der voranstehenden Ansprüche, **dadurch gekennzeichnet, dass** das definierte Anzeigeformat die Anzeigegröße bestimmt, die dem Multimedieninhalt vom Terminal auf seinem Bildschirm dediziert wird.

9. Server, der einen Multimedieninhalt (100) in einer Datei (104) speichert, die in einem derartigen Format kodiert ist, dass die gesamte Datei (104) von einer Anwendung angefordert wird, die dieses Format verarbeitet, um eine Anzeige des Multimedieninhalts auf einem Bildschirm zu erzeugen, **dadurch gekennzeichnet, dass** es umfasst:
- Mittel zum Empfangen einer Übertragungsanforderung einer Kodierung der Anzeige (106) eines Teils des Multimedieninhalts (100) gemäß einem definierten Wiedergabeformat, wobei die Anforderung von einem entfernten Terminal ausgegeben wird,
- Mittel zum Verwenden der gespeicherten Datei zum Erzeugen der genannten Anzeigekodierung (106) gemäß dem vom Terminal (108) definierten Wiedergabeformat und
- Mittel zum Übertragen der genannten Kodierung der Anzeige (106) auf das Terminal (108) in Form eines Bildes mittels eines Protokolls zum Teilen der grafischen Schnittstelle, und das somit einem Nutzer den Zugang zu dem Teil des Multimedieninhaltes erlaubt, ohne die Übertragung der gesamten, diesen Inhalt kodierenden Datei anzufordern,
wobei die genannten Mittel an der Umsetzung eines Verfahrens gemäß einem der voranstehenden Ansprüche beteiligt sind.

10. Terminal (108), umfassend Anzeigemittel eines Teils eines Multimedieninhaltes (100) auf einem Bildschirm (107), wobei der Multimedieninhalt (100) durch Daten kodiert wird, die in einer Datei (104) inbegriffen sind, die durch einen entfernten Server (102) des Terminals (104) in einem derartigen Format gespeichert ist, dass die gesamte Datei (104) von einer Anwendung angefordert wird, die dieses Format verarbeitet, um eine Anzeige des Multimedieninhaltes auf einem Bildschirm (107) des Terminals (108) zu erzeugen, **dadurch gekennzeichnet, dass** es Mittel umfasst, um die Übertragung einer Kodierung der Anzeige (106) des Teils des Multimedieninhaltes (100) in Form eines Bildes gemäß einem Wiedergabeformat anzufordern, das derart definiert ist, dass ein Verfahren gemäß einem der Ansprüche 1 bis 8 umgesetzt wird.

11. Computerprogramm, umfassend Anweisungen, die dieses dazu veranlassen, die Schritte des Verfahrens gemäß irgendeinem der Ansprüche 1 bis 8 umzusetzen, wenn das Programm von dem Computer ausgeführt wird.

12. Von einem Computer lesbares Speichermittel, auf dem das Computerprogramm gemäß Anspruch 11 gespeichert ist.

## Claims

1. Method for displaying a portion of a multimedia content (100) on a screen (107) of a multimedia terminal (108), the multimedia content (100) being coded by data included in a file (104), stored on a server (102) remote from the terminal (108), in a format such that the entire file (104) is required by an application processing this format in order to generate a display of the multimedia content on the screen (107) of the terminal (108), **characterised in that** it comprises the following steps:
- the step for the terminal (108) of requesting the transmission of an encoding of the display (106) of the portion of the multimedia content (100) in a defined rendering format,
- the step for the server (102) of using the file to generate said encoding of the display (106) according to the rendering format defined by the terminal (108), and
- the step for the server (102) of transmitting, to the terminal (108), said encoding of the display (106) in the form of an image, by means of a graphic interface sharing protocol, thus allowing a user to access the portion of the multimedia content without requiring the transmission of the entire file coding this content.

2. Method according to claim 1 **characterised in that** it comprises the additional step for the terminal (108) of storing different rendering formats defined for different applications processing different file formats (104).

3. Method according to claim 2 **characterised in that** it comprises the additional step for the terminal (108) of displaying control buttons on a screen (701) and of associating the control of such a button with the transmission of a command to the server intended to control the use of the file by the server.

4. Method according to claim 3 **characterised in that** the transmission of a command to the server (102) by the terminal (108) is coded according to a graphic interface sharing protocol.

5. Method according to one of the preceding claims **characterised in that**, the multimedia content being a video, the server (102) transmits the encoding of the display of the video to the means, first, of position data encoding the position of the video according to the defined rendering format and, second, of video data encoding the images forming the video.

6. Method according to claim 5 **characterised in that** the position data and the video data are generated from the same memory (404) storing the encoding of a display of the multimedia content generated by the server according to a matrix encoding.

7. Method according to one of claims 4, 5 or 6 **characterised in that** it comprises the additional step (407) of processing the position data generated to inhibit the transmission of video data.

8. Method according to one of the preceding claims **characterised in that** the defined display format determines the size of the display dedicated by the terminal on its screen to the multimedia content.

9. Server storing a multimedia content (100) in a file (104), coded in a format such that the entire file (104) is required by an application processing this format in order to generate a display of the multimedia content on a screen, **characterised in that** it comprises:
- means for receiving a transmission request of an encoding of the display (106) of a portion of the multimedia content (100) in a defined rendering format, the request being transmitted by a remote terminal,
- means for using the file stored to generate said encoding of the display (106) according to the rendering format defined by the terminal (108), and
- means for transmitting, to the terminal (108), said encoding (106) of the display in the form of an image, by means of a graphic interface sharing protocol, thus allowing a user to access the portion of the multimedia content without requiring the transmission of the entire file coding this content,
said means participating in the implementation of a method in accordance with one of the preceding claims.

10. Terminal (108) comprising means for displaying a portion of a multimedia content (100) on a screen (107), the multimedia content (100) being coded by data included in a file (104), stored on a server (102) remote from the terminal (104), in a format such that the entire file (104) is required by an application processing this format in order to generate a display of the multimedia content on a screen (107) of the terminal (108), **characterised in that** it comprises means for request the transmission of a encoding of the display (106) of the portion of the multimedia content (100) in the form of an image, according to a defined rendering format so as to implement the method according to one of claims 1 to 8.

11. Computer program comprising instructions that, when the program is executed by computer, cause the latter to carry out the steps of the method according to any of claims 1 to 8.

12. Computer-readable storage means, whereon is recorded the computer program according to claim 11.
